# FASCICULE DE BREVET EUROPEEN

(11) **EP 0 379 432 B1**
(45) Date de publication et mention de la délivrance du brevet: **01.06.1994**
(21) Numéro de dépôt: 90400135.1
(22) Date de dépôt: 17.01.1990
(51) Int. Cl.: G09B 29/00, G09B 23/40, E21B 47/026

(54) **Procédé de représentation graphique polychrome du pendage des couches géologiques**
Verfahren zur mehrfarbigen graphischen Darstellung der Fallinie geologischer Schichten
Method for the polychrome graphical representation of the depositional slope of geological layers

(30) Priorité: 18.01.1989 FR 8900529
(43) Date de publication de la demande: 25.07.1990
(73) Titulaire: SCHLUMBERGER LIMITED, New York, N.Y. 10172 (US); SCHLUMBERGER TECHNOLOGY B.V., NL-2517 KB Den Haag (NL); SCHLUMBERGER HOLDINGS LIMITED, Road Town, Tortola (VG)
(72) Inventeur: Delhomme, Jean-Pierre René, F-92140 Boulogne Billancourt (FR)
(74) Mandataire: Chareyron, Lucien

(56) Documents cités:
- FR-A- 2 296 858
- GB-A- 1 468 351
- GB-A- 2 073 924
- US-A- 4 517 835

## Description

L'invention se situe dans le domaine de la mesure du pendage des couches géologiques traversées par un sondage. Elle concerne plus particulièrement un procédé pour représenter, sous la forme d'un graphique polychrome, les informations relatives au pendage des couches géologiques.

De manière connue, les diagraphies de pendagemétrie effectuées dans les sondages servent essentiellement à définir le pendage structural, stratigraphique et sédimentologique des couches géologiques. En ce qui concerne les sondes de pendagemétrie et l'exploitation des données enregistrées à l'aide de telles sondes, on pourra utilement se reporter au livre de Oberto Serra intitulé "Diagraphies Différées - Bases de l'Interprétation" (Tome 1- Acquisition des Données Diagraphiques) - Bulletin des Centres de Recherches Exploration-Production Elf-Aquitaine -.

Après traitement à l'ordinateur des données enregistrées, les résultats relatifs au pendage des couches sont généralement présentés sous forme graphique. Parmi les présentations graphiques possibles, la plus généralement adoptée est connue sous la dénomination "log-flèches" ou "tracé-flèches" (arrow-plot en anglais) et illustrée à la figure 1 de la présente demande (voir aussi FR-A-2 296 858). L'ordonnée du tracé-flèches représente l'échelle des profondeurs le long du sondage, et l'abscisse représente l'échelle des angles du pendage. Chaque point du tracé-flèches est matérialisé par un symbole ressemblant à un clou. La tête du clou, par exemple un rond ou un triangle, indique l'angle du pendage en fonction de la profondeur, tandis que la pointe du clou donne la direction du pendage, le nord étant dirigé vers le haut du tracé. On obtient ainsi une présentation graphique bidimensionnelle d'une information à trois dimensions (profondeur, angle du pendage, direction du pendage) facile à lire.

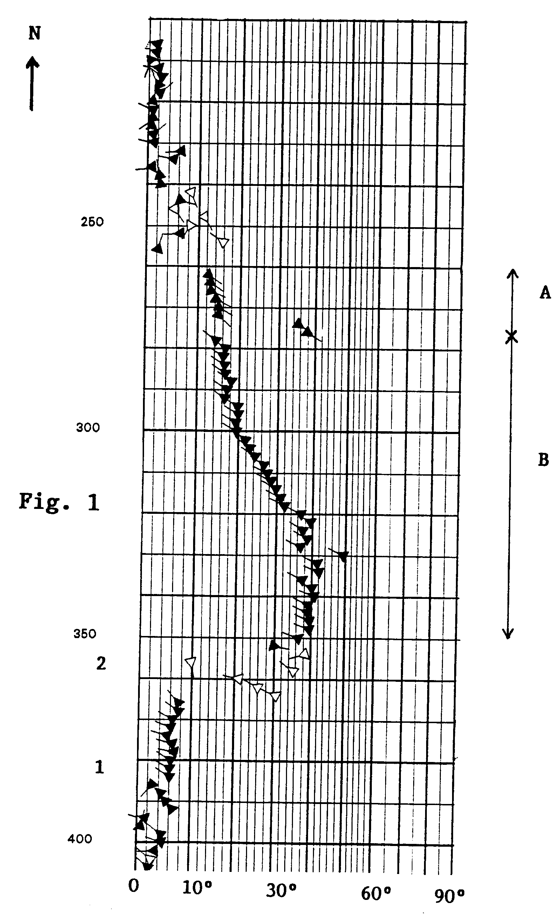

Les progrès réalisés en matière d'acquisition et de traitement des données relatives au pendage résultent très souvent en une augmentation de la densité des points sur le tracé-flèches, d'où la nécessité de leur affecter un code représentatif de la qualité de la mesure : la tête du clou est noircie pour les mesures de qualité bonne à moyenne (point 1 de la figure 1), et elle reste blanche pour les mesures de qualité médiocre (point 2 de la figure 1). On comprendra aisément qu'avec une telle codification, la vision humaine est tout naturellement attirée par les clous noircis et, par la même, aura tendance à atténuer les clous laissés en blanc.

Cependant, lorsque les mesures sont de très bonne qualité et, par conséquent, la densité des clous noirs très élevée, la vision humaine appréhende nettement moins bien l'information liée à la direction du pendage. De plus, les têtes de clou peuvent parfois masquer les pointes des clous voisins.

L'invention a pour objet un procédé de présentation graphique polychrome permettant de remédier aux inconvénients énumérés ci-dessus.

Le procédé selon l'invention consiste à représenter les informations relatives au pendage à l'aide d'un tracé-flèches composé de clous, l'emplacement de chaque tête de clou et l'orientation de la pointe du clou étant respectivement représentatifs de l'amplitude du pendage et de la direction azimutale du pendage. Le procédé est caractérisé par le fait que l'on affecte à chaque clou, en fonction de la direction du pendage, une couleur sélectionnée à partir d'une palette de chrominances fournissant une correspondance prédéterminée entre directions azimutales et chrominances.

De préférence, la palette de chrominances est un cercle chromatique repéré en azimut, c'est-à-dire un cercle organisé de manière à ce que deux couleurs diamétralement opposées soient complémentaires l'une de l'autre. En particulier, on pourra par exemple prendre douze chrominances de base avec le bleu au nord, le rouge à l'est, le jaune au sud et le vert à l'ouest.

Selon une variante, la couleur est en outre sélectionnée dans une gamme de saturation variant du pâle au vif de manière à ce que la saturation de la couleur sélectionnée soit représentive de la qualité des informations relatives au pendage.

L'invention sera mieux comprise à la lecture de la description détaillée ci-après, et des dessins annexés sur lesquels :
- la figure 1 illustre le tracé-flèches tel qu'il est connu dans le domaine de la pendagemétrie,
- la figure 2 illustre (en noir et blanc) le tracé-flèches polychrome selon l'invention qui a été établi à partir des mêmes données que celles utilisées pour établir le tracé-flèches de la figure 1.

La figure 1, partiellement décrite ci-dessus, illustre bien le risque de confusion qui peut se produire à la lecture d'un tracé-flèches. Dans le cas d'une densité élevée de clous dans les intervalles A et B, des pointes de clous sont partiellement masquées par les têtes de clous voisines. A première vue, on pourrait croire que les intervalles A et B appartiennent à une seule séquence de couches sédimentaires dont l'angle de pendage croit avec la profondeur entre 10° et 40°. Un examen plus minutieux montre en fait qu'il s'agit de deux couches distinctes qui à leur interface présentent sensiblement le même pendage (environ 15°) mais dont les directions sont diamétralement opposées, à savoir le sud-est pour l'intervalle A et le nord-ouest pour l'intervalle B .

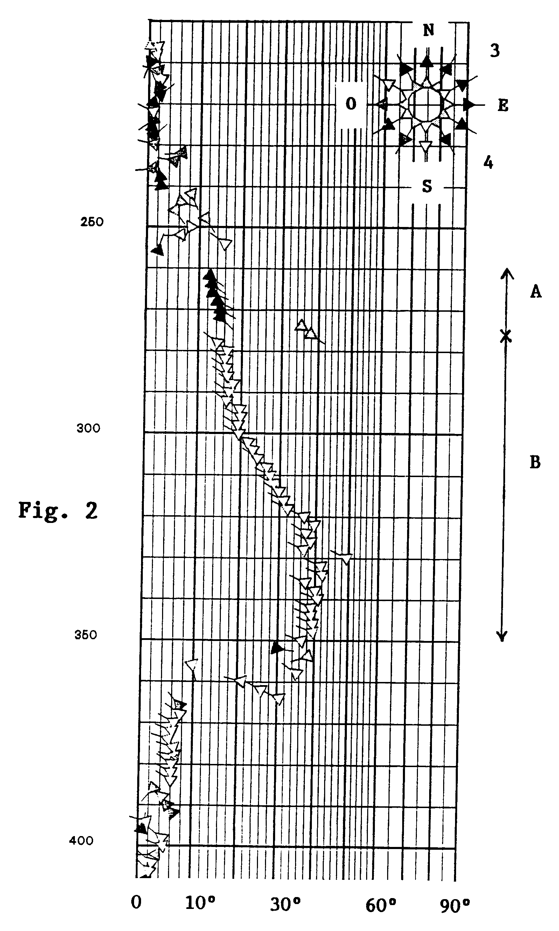

La figure 2 illustre (en noir et blanc) un exemple de tracé-flèches polychrome obtenu avec le procédé selon l'invention, les données étant les mêmes que celles utilisées pour le tracé-flèches de la figure 1. A toutes fins utiles, un exemplaire couleur de cette figure 2 est joint au dossier de la présente demande de brevet.

Dans cet exemple donné à titre illustratif, une première palette de couleurs 3 formé par un cercle des chrominances repéré en azimut, fournit une correspondance entre une série de chrominances et des directions azimutales de pendage, le nord étant dirigé vers le haut de la figure. La palette comprendra par exemple douze chrominances de base régulièrement réparties sur la périphérie du cercle, de sorte que chaque chrominance couvre une plage azimutale de 30°. En outre, on pourra organiser les douze chrominances selon le cercle chromatique de manière à ce que deux couleurs diamétralement opposées soient complémentaires l'une de l'autre : par exemple le bleu pour le nord, le rouge pour l'est, le jaune pour le sud et le vert pour l'ouest.

Les couleurs de cette première palette sont affectées aux clous en fonction de la direction du pendage, la couleur attribuée à un clou de direction azimutale donnée étant la couleur du clou de la palette qui a le même azimut. De préférence, les clous sont tracés en noir et la couleur correspondant à la direction du pendage est reportée à l'intérieur de la tête des clous.

En reprenant les intervalles A et B discutés à propos de la figure 1, l'on constate sur le tracé-flèches de la figure 2 qu'il n'existe plus de risque de confusion, les clous de l'intervalle A étant en rouge (noir sur la figure 2) et ceux de l'intervalle B en bleu (clair sur la figure 2).

Une variante du procédé décrit ci-dessus consiste à intégrer dans le tracé-flèches un critère indicatif de la qualité de la mesure : on pourra par exemple diminuer la saturation ou augmenter la luminance de la couleur correspondant à la direction azimutale du pendage, c'est-à-dire rendre la couleur de plus en plus pâle au fur et à mesure que la qualité de la mesure correspondante décroît.

Une forme simplifiée de cette variante consiste à utiliser uniquement deux critères : bon ou médiocre. A cet effet, on utilisera par exemple une seconde palette de couleurs 4 située à l'intérieur de la première palette 3 et reproduisant à l'identique l'organisation de la première palette. Cette seconde palette 4 reprend les couleurs du cercle des chrominances avec une saturation très faible ou une luminance élevée, ce qui a pour effet de rendre les couleurs extrêmement pâles.

## Revendications

1. Procédé pour représenter des informations relatives au pendage des couches geologiques à l'aide d'un tracé-flèches composé de clous, l'emplacement de chaque tête de clou et l'orientation de sa pointe étant respectivement représentatifs de l'amplitude du pendage et de la direction azimutale du pendage, caractérisé par le fait que l'on affecte à chaque clou, en fonction de la direction du pendage, une couleur sélectionnée à partir d'une palette de chrominances fournissant une correspondance prédéterminée entre directions azimutales et chrominances.

2. Procédé selon la revendication 1, caractérisé par le fait que la palette de chrominances est un cercle chromatique repéré en azimut de manière à ce que deux couleurs diamétralement opposées soient complémentaires l'une de l'autre.

3. Procédé selon la revendication 2, caractérisé par le fait que, sur ledit cercle chromatique, le bleu correspond au nord, le rouge à l'est, le jaune au sud et le vert à l'ouest.

4. Procédé selon l'une des revendications 1 à 3, caractérisé par le fait que ladite couleur est en outre sélectionnée dans une gamme de saturation ou de luminance variant du pâle au vif de manière à ce que la saturation ou la luminance de la couleur sélectionnée soit représentative de la qualité des informations relatives au pendage.

5. Procéde selon l'une des revendications 1 à 4, caractérisé par le fait que la couleur est affectée à la tête du clou.

## Patentansprüche

1. Verfahren zum Darstellen von Informationen bezüglich der Fallinie geologischer Schichten mit Hilfe einer aus Nägeln zusammengesetzten Pfeilbahn, wobei die Plazierung jedes Nagelkopfes und die Orientierung seines Schaftes repräsentativ sind für die Amplitude des Fallens bzw. die azimutale Richtung des Fallens, dadurch gekennzeichnet, daß man jedem Nagel in Abhängigkeit von der Richtung des Fallens eine Farbe zuordnet, ausgewählt ausgehend von einer Palette von Farbtönen, unter Schaffung einer vorbestimmten Korrespondenz zwischen den azimutalen Richtungen und den Farbtönen.

2. Verfahren nach Anspruch 1, dadurch gekennzeichnet, daß die Palette von Farbtönen ein chromatischer Kreis ist, der auf den Azimut bezogen ist derart, daß zwei einanander diametral gegenüberliegende Farben zueinander komplementär sind.

3. Verfahren nach Anspruch 2, dadurch gekennzeichnet, daß auf dem chromatischen Kreis das Blau dem Norden entspricht, das Rot dem Osten entspricht, das Gelb dem Süden entspricht und das Grün dem Westen entspricht.

4. Verfahren nach einem der Ansprüche 1 bis 3, dadurch gekennzeichnet, daß die Farbe im übrigen ausgewählt wird aus einem Bereich von Sättigungen oder Luminanzen, der vom Blass bis zu deckend reicht derart, daß die Sättigung oder Luminanz der ausgewählten Farbe repräsentativ ist für die Qualität der Informationen bezüglich der Fallinie.

5. Verfahren nach einem der Ansprüche 1 bis 4, dadurch gekennzeichnet, daß die Farbe dem Nagelkopf zugeordnet ist.

## Claims

1. A method of representing information relating to the dip of earth formations by means of an arrow plot made up of nails, with the location of each nail head and the orientation of each nail tip being respectively representative of the amplitude of the dip and the azimuth direction of the dip, the method being characterized by the fact that each nail has a color attributed thereto as a function of the direction of dip, said color being selected from a palette of colors providing a predetermined correspondence between azimuth directions and colors.

2. A method according to claim 1, characterized by the fact that the palette of colors is a chromatic circle with azimuth references such that any two diametrically opposite colors are complementary to each other.

3. A method according to claim 2, characterized by the fact that blue corresponds to north, red to east, yellow to south, and green to west on said chromatic circle.

4. A method according to any one of claims 1 to 3, characterized by the fact that said color is additionally selected within a range of saturation or luminance values varying from pale to bright so that the saturation or luminance of a selected color is representative of the quality of the information relating to dip.

5. A method according to any one of claims 1 to 4, characterized by the fact that the color is painted in the head of each nail.
